# DEMANDE DE BREVET EUROPEEN

(11) **EP 0 652 054 A1**
(43) Date de publication de la demande: **10.05.1995**
(21) Numéro de dépôt: 94402256.5
(22) Date de dépôt: 07.10.1994
(51) Int. Cl.: B08B 9/08, A01J 7/00

(54) **Installation de nettoyage de cuve de stockage du lait**

(30) Priorité: 08.10.1993 FR 9312008
(71) Demandeur: HUGONNET, F-21850 Saint Apollinaire (FR)
(72) Inventeur: Claude, Gérard, F-21800 Chevigny Saint Sauveur (FR)
(74) Mandataire: Eidelsberg, Victor Albert

(57) **Abrégé**

Il est prévu des moyens de liaison de la vanne de sortie (3) à la vanne d'évacuation (13) de manière que la fermeture de la vanne de sortie (3) entraîne l'ouverture de la vanne d'évacuation (13). Application notamment à l'industrie du lait.

## Description

La présente invention se rapporte aux installations de stockage du lait.

On connaît déjà une installation de stockage du lait qui comporte une cuve du bas de laquelle part un conduit de sortie muni d'une vanne de sortie. Le conduit de sortie bifurque d'une part, en un conduit de vidange muni d'une vanne de vidange permettant de vidanger la cuve et d'autre part, en un conduit de lavage muni d'une pompe et débouchant dans la partie supérieure de la cuve. Si la vanne de sortie est ouverte et la vanne de vidange fermée, le circuit, constitué du conduit de sortie et du conduit de lavage, forme un circuit de lavage permettant de faire passer de l'eau de lavage plusieurs fois dans la cuve pour mieux la laver. Un conduit d'arrivée d'eau débouche dans la partie supérieure de la cuve par un dispositif de projection permettant de projeter de l'eau sur les parois de la cuve pour en détacher les impuretés grâce à l'effet mécanique du jet, le courant d'eau chargé d'impuretés étant évacué par le conduit de sortie et par le conduit de vidange. L'eau est amenée au conduit d'arrivée par un conduit d'admission muni d'une vanne d'admission et communiquant avec une source d'eau. Du point de jonction des conduits d'admission et d'arrivée, part un conduit d'évacuation muni d'une vanne d'évacuation. Cette vanne d'évacuation est fermée lorsque l'on souhaite laver la cuve, alors que la vanne de sortie est ouverte. Quand la vanne de sortie est fermée pour stocker du lait dans la cuve, la vanne d'évacuation est ouverte, de sorte que, même en cas de fuite de la vanne d'admission laissant s'écouler intempestivement de l'eau, celle-ci ne peut pas venir dans la cuve se mélanger au lait. Cette eau est évacuée par le conduit d'évacuation.

Cette installation l'emporte sur celles à alimentation d'eau par le bas de la cuve en efficacité de nettoyage. Mais elle présente deux inconvénients principaux.

Pour faire débuter le cycle de lavage, l'opérateur doit manoeuvrer la vanne de sortie, puis commander la vanne d'admission. Si, par oubli, il commande la vanne d'admission sans avoir au préalable ouvert la vanne de sortie, l'eau s'accumule dans la cuve jusqu'à débordement, sans effectuer de lavage.

Pour y remédier, il faut prévoir une liaison, qui ne peut pas être purement mécanique, entre la vanne de sortie manuelle et l'électrovanne d'admission. Cette liaison est compliquée, coûteuse et peu fiable.

Il arrive souvent, notamment quand la source d'eau fournit de l'eau sous basse pression et à forte teneur en sable, provenant par exemple d'un puits de ferme, que l'électrovanne d'admission, et, en même temps, l'électrovanne d'évacuation présentent un défaut de fonctionnement. Alors que la vanne de sortie est fermée, la vanne d'admission fuit. La vanne d'évacuation, qui devrait être ouverte, ne l'est pas ou ne l'est qu'insuffisamment, les freineurs qui sont montés en aval de celle-ci pouvant également limiter trop le débit d'évacuation. Cela a lieu d'autant plus souvent que l'électrovanne d'évacuation est peu sûre, tout en étant très coûteuse, car elle est nécessairement du type ouverte quand elle est hors tension, puisque c'est en cette position qu'elle doit se trouver le plus souvent. De l'eau vient se mélanger au lait par le conduit de lavage.

L'invention remédie à ces inconvénients par une installation de stockage qui donne une grande efficacité de nettoyage, qui prévient tout débordement ou accumulation d'eau dans la cuve ou tout mélange d'eau à du lait et qui cependant est plus simple à fabriquer et à entretenir et est plus sûre à utiliser.

Suivant l'invention, il est prévu des moyens de liaison de la vanne de sortie à la vanne d'évacuation de manière que la fermeture de la vanne de sortie entraîne l'ouverture de la vanne d'évacuation.

Cette liaison, qui avantageusement est purement mécanique, est plus sûre, parce qu'elle permet d'utiliser comme vanne d'évacuation une vanne normale, du type fermée quand elle est hors tension, et parce qu'alors, une défaillance de la liaison ou de la vanne d'évacuation a toute chance de laisser celle-ci en position ouverte ou entrouverte, à la différence d'une électrovanne du type ouverte quand elle est hors tension qui, lors d'une défaillance, peut prendre plus facilement une position fermée. Si l'opérateur oublie d'ouvrir la vanne de sortie avant de commander l'électrovanne d'admission d'eau, les vannes de sortie et d'évacuation ayant des organes de manoeuvre indépendants, la vanne d'évacuation reste ouverte. De l'eau de lavage sort à l'extérieur par le conduit d'admission et par le conduit d'évacuation. L'opérateur qui voit un jet d'eau anormal sortir de l'installation est averti de son oubli.

Pour pouvoir laver la cuve, il convient que les moyens de liaison soient tels que l'ouverture de la vanne de sortie entraîne la fermeture de la vanne d'évacuation.

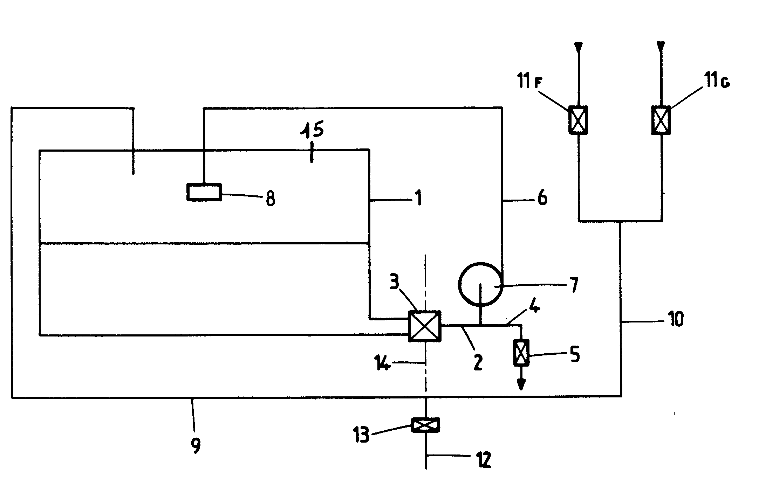

La figure unique du dessin annexé est un schéma de l'installation de stockage du lait suivant l'invention.

L'installation comprend une cuve 1 du bas de laquelle part un conduit de sortie 2 muni d'une vanne de sortie 3. Le conduit 2 bifurque d'une part en un conduit de vidange 4 ayant une vanne de vidange 5 et d'autre part en un conduit de lavage 6 muni d'une pompe 7 et débouchant dans la partie supérieure de la cuve par un diffuseur 8. Un conduit d'arrivée 9 débouche dans la partie supérieure de la cuve 1 par un dispositif de projection non représenté et bifurque d'une part en un conduit d'admission 10 muni d'une vanne d'admission 11_{F} d'eau froide et d'une vanne d'admission 11c d'eau chaude et d'autre part en un conduit d'évacuation 12 muni d'une vanne d'évacuation 13. Le point le plus haut du conduit d'arrivée 9 est plus haut que le conduit d'évacuation 12, de sorte que de l'eau passe préférentiellement par le conduit d'évacuation 12 quand elle peut passer aussi par le conduit d'arrivée 9. On peut également prévoir, au lieu d'une vanne d'évacuation 13, une vanne 13 à trois voies qui, en une position, autorise l'écoulement du conduit d'admission 10 au conduit d'évacuation 12 et l'interdit du conduit d'admission 10 au conduit d'arrivée 9 et, en l'autre position, autorise ce qui était interdit et interdit ce qui était autorisé en la première position. L'expression "vanne d'évacuation" montée sur le conduit d'évacuation englobe, dans le présent mémoire, une vanne à trois voies de ce genre. Une liaison mécanique 14 symbolisée par des traits mixtes, constituée par exemple sous la forme d'un téton issu du plongeur de la vanne 3, et pénétrant dans une cavité de la tige de la vanne 13, est telle que la fermeture de la vanne de sortie 3 entraîne l'ouverture de la vanne d'évacuation 13, tandis que l'ouverture de la vanne de sortie 3 entraîne la fermeture de la vanne d'évacuation 13.

Pour remplir la cuve 1 de lait, on ferme la vanne 3.

Pour laver la cuve 1 par un jet entraînant les impuretés, on ouvre la vanne 3 et la vanne 11f ou 11c. La vanne 13 se ferme. De l'eau de lavage passe par le conduit 10 et par le conduit 9 et est projetée dans la cuve 1. Cette eau de lavage ressort par le conduit 2 et est recyclée par la pompe 7 et par le conduit 6 dans la cuve 1.

Si l'opérateur oublie de fermer la vanne 3 avant d'ouvrir la vanne 11f, la vanne 12 reste ouverte et un jet d'eau passant par le conduit 10, par la vanne 13 et par le conduit 12 jaillit de l'installation. L'opérateur est averti de son oubli.

Si la vanne 13 est fermée alors que du lait est stocké dans la cuve 1 et si, la vanne 11f étant pourtant fermée et la vanne 13 étant ouverte, la vanne 11f fuit et la vanne 13, en raison de la faible pression de l'eau et des particules qui y sont contenues, n'a pas la position ouverte qu'elle devrait avoir, mais une position entrouverte, l'eau, qui fuit par la vanne 11f, sort à l'extérieur par le conduit 12 d'évacuation au lieu de remonter par le conduit 9 et de venir se mélanger au lait contenu dans la cuve 1.

## Revendications

1. Installation de stockage du lait, comprenant une cuve (1) du bas de laquelle part un conduit de sortie (2) muni d'une vanne de sortie (3) et bifurquant d'une part, en un conduit de vidange (4) ayant une vanne de vidange (5) et d'autre part en un conduit de lavage (6) muni d'une pompe (7) et débouchant dans la partie supérieure de la cuve (1), un conduit d'arrivée (9) débouchant dans la partie supérieure de la cuve (1) par un dispositif de projection et bifurquant d'une part en un conduit d'admission (10) muni d'une vanne d'admission (11) et d'autre part en un conduit d'évacuation (12) muni d'une vanne d'évacuation (13), caractérisée en ce que par des moyens de liaison de la vanne de sortie (3) à la vanne d'évacuation (13), de manière que la fermeture de la vanne de sortie (3) entraîne l'ouverture de la vanne d'évacuation (13).

2. Installation suivant la revendication 1, caractérisée en ce que par des moyens de liaison de la vanne de sortie (3) à la vanne d'évacuation (13) de manière que l'ouverture de la vanne de sortie (3) entraîne la fermeture de la vanne d'évacuation (13).

3. Installation suivant la revendication 1 ou 2, caractérisée en ce que la liaison entre les vannes de sortie (3) et d'évacuation (13) est mécanique.

4. Installation suivant l'une des revendications précédentes, caractérisée en ce que la vanne de sortie (3) et la vanne d'admission (13) ont des organes de manoeuvre indépendants.

5. Installation suivant l'une des revendications précédentes, caractérisée en ce que la vanne d'évacuation (13) et du type fermé quand elle est hors tension.
